# EUROPEAN PATENT APPLICATION

(11) **EP 0 936 843 A2**
(43) Date of publication of application: **18.08.1999**
(21) Application number: 99500016.3
(22) Date of filing: 29.01.1999
(51) Int. Cl.: H05B 6/12

(54) **Inductive heating unit for cooking**

(30) Priority: 12.02.1998 ES 9800283
(71) Applicant: Balay S.A., 50059 Zaragoza (ES)
(72) Inventor: Garcia Martinez, Jose Andres, 50059 Zaragoza (ES); Garcia Jimenez, Jose Ramon, 50059 Zaragoza (ES)

(57) **Abstract**

Inductive whole for cooking, which is useful for its assembly in cooking plates by induction that are installed on the oven and in whose upper part it is installed the ceramic glass or other insulating material where the ferric-magnetic receptacles for the cooking of the foods are placed, so that the inductive whole (1) is formed by an unitary body that has the coil (2) defined by a rolled up strip of copper, with a height between 4 and 6 millimetres, that is fixed by a glue between two mica sheets (3) and (4), so that under the lower mica sheet (4) there is a base plate (5) of alluminium that acts as an screening and separated an appropriate distance for defining the level of ferrites.

## Description

### OBJECT OF THE INVENTION.

As is expressed in the title of the present descriptive report, the following invention consists on a inductive whole for cooking, being destined for its utilization in induction cooking plates, so that the heater energy is generated in the own receptacle that contains the foods, for which the same one is made of ferric-magnetic material and remains placed on the ceramic glass or other insulating material, in relationship to the coil that causes the induced currents and that is placed under the ceramic glass or other insulating material.

Through the proposed inductive whole, it consists on obtaining an unitary whole which has the coil defined by an strip which is rolled up like a spiral and placed between a pair of mica sheets, being fixed to them by a glue, and an alluminium plate placed under the lower plate of mica and separated a distance appropriate for defining the level of ferrites, so that the inductive whole obtained has a estimated height between 10 and 13 millimetres which let place the electronics of power and control under the alluminium plate in the own tray of assembly of the inductive wholes, which is installed on the oven and under the ceramic glass, so that the total height of the hob is reduced below 45 millimetres.

In the other hand, the extremes of the rolled up coil are doubled like a U, which allows their direct setting in the corresponding element of fast connection.

Besides the level of ferrites is defined so that it allows the assembly and the disposition of a variable amount of ferrites, so that for example eight ferrites are used, four of them will remain in an orthogonal position by pairs, while the other four ferrites remain placed in a longitudinal way between the external extremes of the cited ferrites, all for obtaining an homogeneous sharing out of the temperature on the receptacle.

### FIELD OF APPLICATION.

The inductive whole for the heating by induction is applicable those cooking plates that are assembled on the oven, and whose upper part has the corresponding ceramic glass or other insulating material on which the receptacles that contain the foods for cooking are placed, being the cited receptacles made of ferric-magnetic material, so that the heater energy is generated on the same ones and therefore, there are not any losses because of the thermic inertia.

### BACKGROUND OF THE INVENTION.

The induction cooking plates mean a drastic change in the conventional way of cooking, since the heater energy is generated in the own receptacle that contains the foods for cooking, through induced currents and not through thermic conductivity, so that thus there is not flame or heater source and therefore there are not losses because of the thermic inertia, which means that the energetic efficiency will be superior than the efficiency of the traditional cooking systems by thermic conductivity.

In the other hand, the module of power lodges the electronic components that, being governed by the corresponding microprocessor, give the power to the heater elements so that in the cited module of power, the voltage of mains is transformed in other of high frequency for causing the induction in the heater elements, and therefore it is placed in an apart position with regard to the cited heater elements.

Thus, the module of power can remain installed in the lower part of the piece of furniture of the kitchen, so that it is necessary both the corresponding assembly and the necessary connection cables with the heater elements far from it, while in the case of placing the module of power under the coils, the total height of the hob is bigger than 50 millimetres and therefore it makes difficult and even impedes the installation of an oven under it in normal condition.

Likewise, among the existing backgrounds we can quote the United States Patent US-A-4029926 which shows a cooker by induction that contains a working coil formed by a solid conductor that is threaded in an spiral with an appropriate pass of thread, so that the cited solid conductor can have either a rectangular section (shape of a rolled up strip) or a circular section (wire).

The spiral materialized by the solid conductor remains in a support with some grooves, which guarantees a appropriate space among the turns of the same one.

In the other hand the applicant of the present descriptive dossier is also the applicant of the spanish Invention Patent P9200787 and its Adittion Certificate P9300505 in which an induction heating device is claimed.

In the Invention Patent an induction heating device is described, whose inductive coil is made up of a rigid wide between 1 and 1,3 millimetres, being the cited coil placed in a groove in the upper side of a support, being equidistant its rings, so that under the cited coil there are some ferrites placed into the respective morticings, preferably in number of four and orthogonally placed by pairs, so that the groove of the cited support has some U-shaped specific hollows with convergent wings, that cause the fastening of the rigid wire by pressing. Likewise, the rings of the coil can be distributed in several ways.

In the Certificate P9300505 of Addition to the previous cited Patent, it is described a coil defined by a rolled up strip with a thickness and a height preferably between 0,25 and 0,45 millimetres and 5 and 10 millimetres respectively, remaining in a vertical position on the upper smooth side of a base support by means of a mica sheet, while on its upper part there is a kapton sheet, so that the rings of the coil can be equidistant among them or according to any other distribution and having, under the coil, four ferrites into the corresponding morticings placed in an orthogonal way by pairs.

### DESCRIPTION OF THE INVENTION.

In the present report an inductive whole for cooking is described, which is useful for its assembly in cooking plates by induction installed on the oven, being installed on them the ceramic glass or other insulating material where the ferric-magnetic receptacles for the cooking of the foods are placed, so that the inductive whole is formed by an unitary body that has the coil that generates the induced currents, being it defined by a rolled up strip of copper, with a height between 4 and 6 millimetres, that is fixed by a glue between two mica sheets, remaining under the lower mica sheet a base plate of alluminium that acts as an screening and is separated an appropriate distance for defining the level of ferrites.

On the upper side of the of the base plate of alluminium that acts as an screening, the placements for the ferrites that it incorporates are defined, so that in the case of having 8 ferrites, four of them are placed in an orthogonal way by pairs, and the other four are placed in a longitudinal way between the external extremes of the cited ferrites placed in an orthogonal position by pairs, obtaining an homogeneus sharing out of the temperature.

In the other hand, under the base plate of alluminium that acts as a screening of the inductive whole and because of the minimum height of the whole, the module of power is placed, being assembled in the tray placed on the oven, which means an important economic saving since the module of power remains removed in the socket of the piece of furniture of the kitchen.

The extremes of the coil that is defined by a rolled up strip of copper are finished off like a U, allowing the setting directly to the corresponding connecter of fast connection and thus, any manipulation on the extremes of the strip is not necessary.

In order to complement the description which is done hereinafter and with the purpose of providing a better understanding of the characteristics of the invention, the present descriptive report is accompanied by a set of drawings, in whose figures the most significant details of the invention are defined in an illustrative and not limitative way.

### BRIEF DESCRIPTION OF THE DESIGNS.

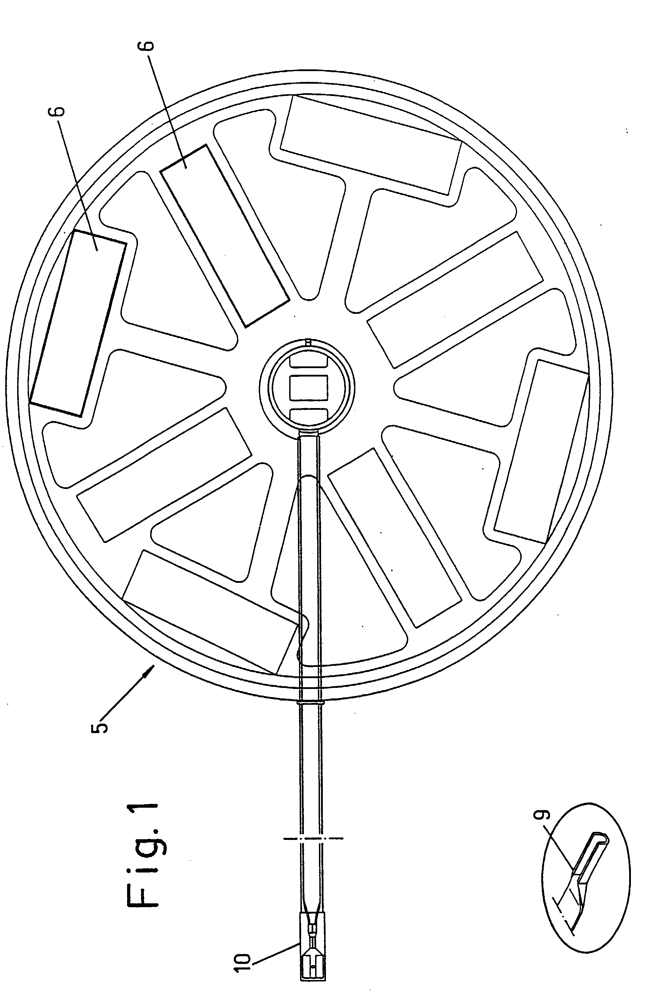

Figure 1.- Ith shows a plan view of the base plate of alluminium, in which the morticings for the eight ferrites incorporated to the inductive whole, where it is observed as four of them are placed in an orthogonal way by pairs and the other four ferrites remain between the external extremes of the previously cited in a longitudinal way, showing a detail of the extreme of the strip for its direct setting to the corresponding connecter of fast connection.

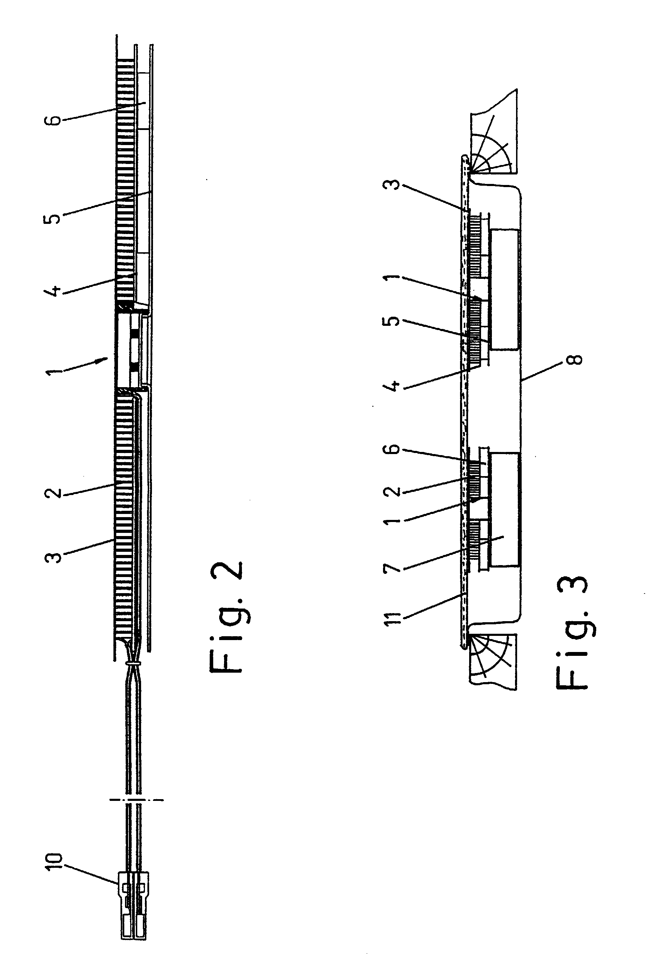

Figure 2.- It shows a view of the inductive whole, according to a diametrical cut, where it is observed the coil defined by a rolled up strip and fixed between a pair of mica sheets by a glue, as well as the base plate of alluminium that is separated of the lower mica sheet a distance that defines the level of ferrites.

Figure 3.- It shows an schematic view of the placing of the inductive wholes with the modules of power under the base plate of alluminium, being they assembled in the tray that will be placed on the oven, which is feasible because of the minimum height obtained in the configuration of the inductive whole.

### DESCRIPTION OF A PREFERRED EMBODIMENT.

In view of the above cited figures and in accordance with the adopted numbering, it is observed as the inductive whole (1) has the coil (2) defined by a rolled up sheet of copper that is fixed by a glue between two mica sheets (3) and (4), while under the mica sheet (4) there is a base plate of alluminium that is separated an appropriate distance for configurating the level of ferrites, so that the various ferrites (6), in this concrete case in number of eight as an example, are placed in the cited space.

In the figure 1, it is observed as the spaces for the placement of the ferrites (6) are on the base plate (5) of alluminium, so that four of the ferrites are placed in an orthogonal way by pairs and the other four ferrites are placed between the external extremes of the previously cited ferrites, in a longitudinal way, obtaining an homogeneous sharing out of the temperature in this way, which is specially important when there are cooking zones by induction with a considerable diameter.

This is thus, since when there are cooking zones by induction with a considerable diameter, as the inductive whole only has four ferrites in an orthogonal way by pairs, as it conventionally happens, the perimetral zones that there are between the extremes of the ferrites do not receive the appropriate temperature, so that the foods are not equally cooked, which means a drawback.

This drawback is easily appreciable in the cooking of some foods as it happens, for example, with the rice, since the rice ist often perfectly cooked in some zones of the receptacle, while the cooking is not enough in other zones, so that if it has eight ferrites, this drawback does not happen because a total homogeneous sharing out of the temperature on the cooking surface.

In the other hand, as the strip of copper that defines the coil (2) has a height approximately between 4 and 6 millimetres, the height of all the inductive whole (1) is between 10 and 13 millimetres, which let place the module of power (7) under the cited inductive whole (7), being they assembled in the own tray (8) of support that is placed on the over, so that the ceramic glass (9), where the ferric-magnetic receptacles for the cooking of the foods are placed, is on this tray.

As the inductive whole (1) can be placed next to the module (7) of power in the tray (8) of support placed on the oven, there is an important economic saving also with the collaboration of the base plate (9) that acts as an screening of the temperature, acting as a protector of the electronics of the cited module (7) of power.

Besides, the incorporation of the base plate of alluminium let work at bigger temperatures than when the support is of plastic, whose advisable temperature of working is between 250 and 260°C at the most.

The conclusion obtained of all the previous comments is the obtaining of a better and faster cooking of the foods, which means an energetic and economic saving.

In the other hand, the extremes (9) of the coil (2) are finished off like a U, which allows its direct setting in the corresponding connecters (10) of fast connection which also means an economic saving with regard to the conventional settings that show enough problems, since the manipulation of the strip is difficult and the settings are carried out by means of the intermediate elements that require an important amount of labour for their joinings.

## Claims

1. INDUCTIVE WHOLE FOR COOKING, which is useful for its assembly in induction cooking plates that are installed on the oven, and in whose upper part it is installed the ceramic glass or other insulating material where the ferric-magnetic receptacles for the cooking of the foods are placed, characterized because the inductive whole (1) is formed by an unitary body that has the coil (2) defined by a rolled up strip of copper, with a height between 4 and 6 millimetres, that is fixed by a glue between two mica sheets (3) and (4), so that under the lower mica sheet (4) there is a base plate (5) of alluminium that acts as an screening and separated an appropriate distance for defining the level of ferrites.

2. INDUCTIVE WHOLE FOR COOKING according to the first claim and characterized because on the upper side of the base plate (5) of alluminium that acts as an screening, the placements for the ferrites (6) that it incorporates are defined.

3. INDUCTIVE WHOLE FOR COOKING acording to the first and second claims and characterized because in the upper side of the base plate (5) of alluminium that act as an screening, the placements for eight ferrites are defined, four of them in an orthogonal way by pairs, and the other four placed in a longitudinal way between the external extremes of the cited ferrites, obtaining an homogeneous sharing out of the temperature.

4. INDUCTIVE WHOLE FOR COOKING according to the first claim and characterized because under the base plate (5) of alluminium that acts as an screening of the inductive whole (1) and because of its minimum height, the module of power (7) is placed, so that they remain assembled in the tray (8) placed on the over.

5. INDUCTIVE WHOLE FOR COOKING according to the first claim and characterized because the extremes (9) of the coil (2) defined by a rolled up strip of copper are finished off like a U, allowing the direct setting to the corresponding connecter (10) of fast connection, so that thus it is not necessary any manipulation on the extremes of the strip.
